# EUROPEAN PATENT APPLICATION

(11) **EP 2 957 530 A1**
(43) Date of publication of application: **23.12.2015**
(21) Application number: 14172714.9
(22) Date of filing: 17.06.2014
(51) Int. Cl.: B65G 47/84, C21D 1/09, H05B 6/10

(54) **Apparatus for induction heating of mechanical components**

(71) Applicant: Saet S.p.A., 10040 Leini (TO) (IT)
(72) Inventor: Salazzari, Leonardo, 10040 Leinì (Torino) (IT); Zona, Mauro, 10134 Torino (IT); Calcagni, Alex, 10040 Leinì (Torino) (IT); Magini, Francesca, 10040 Leinì (Torino) (IT); Schiavon, Alberto, 10040 Leinì (Torino) (IT)
(74) Representative: Notaro, Giancarlo

(57) **Abstract**

An apparatus for induction heating of mechanical components (P) comprises a plurality of operating stations (I, II, III, IV, V) through which each component (P) is carried in sequence in order to carry out a series of operations for induction heating of the component (P). The operating stations (I, II, III, IV, V) are arranged along a circumferential path about a central vertical axis (C). Rotatably mounted about the central vertical axis (C) is a tower (T) carrying on its periphery a plurality of gripping heads (H) having respective peripheral vertical axes (10). The gripping heads (H) are each adapted to grip a respective component (P) and to carry it through the aforesaid stations (I-V) as a result of a rotation of said rotatable tower (T) about the central vertical axis (C), each head being always accompanying the respective component along the aforesaid circumferential path.

## Description

### Field of the invention

The present invention relates to apparatus for induction heating of mechanical components, of the type comprising a plurality of operating stations through which each component is moved in sequence.

### Object of the invention

The object of the invention is to provide an apparatus of the type specified above that will at the same time meet the following different needs:
- high productivity;
- high quality and uniformity of quality of the obtained products;
- high flexibility as regards the possibility of application of the apparatus to different types of components; and
- simple and efficient structure with extremely small overall dimensions in plan view.

### Summary of the invention

With a view to achieving the aforesaid object, the subject of the invention is an apparatus of the type referred to above, characterized in that:
- said operating stations are arranged along a circumferential path about a central vertical axis;
- said operating stations comprise at least one induction-heating station, associated to which is a respective inductor device, for induction heating of the components;
- rotatably mounted about said central vertical axis is a tower carrying on its periphery a plurality of gripping heads having respective peripheral vertical axes; and
- said gripping heads are each adapted to grip a respective component and to carry it in sequence through said stations as a result of a rotation of said rotatable tower about said central vertical axis, each head being permanently accompanying the respective component along said circumferential path.

Thanks to the aforesaid characteristics, the general configuration of the apparatus according to the invention is extremely simple and presents minimum overall dimensions in plan view. At the same time, the apparatus of the invention is characterized by high productivity, due to the rotary-tower movement system, as well as by a uniform quality of the produced pieces, due to that all the components undergo the same operations in the same operating stations and due also to that the gripping heads permanently accompany the respective components throughout the entire path. In the case of detection of products of insufficient quality, this also enables immediate identification of the area of the apparatus that is subject to malfunctioning.

### Further preferred characteristics of the invention

In the case of one embodiment, the gripping heads are rotatable about respective peripheral vertical axes so that the component carried by each gripping head can be rotated about the respective peripheral vertical axis when it is at one of the above stations.

Furthermore, according to a further characteristic of one embodiment of the invention, the operating stations are defined by sectors of a platform on which the tower carrying the gripping heads is rotatably mounted.

Preferably, each gripping head is carried by a vertical spindle rotatably mounted about the respective vertical axis within a spindle supporting unit, and each spindle supporting unit is in turn carried by a respective slide that is slidably mounted along a respective vertical axis on a respective guide of said rotatable central tower.

A further subject of the present invention is the method for induction heating of mechanical components which can be implemented by means of the apparatus described above.

### Detailed description of a preferred embodiment

Further characteristics and advantages of the invention will become apparent from the following description with reference to the annexed drawings, which are provided purely by way of non-limiting example and in which:
- Figure 1 is a diagrammatic perspective view that shows a platform forming part of the preferred embodiment of the invention, on which the various operating stations of the apparatus are provided, according to a circumferential path along which the components are carried in sequence;
- Figure 1A is a side view at an enlarged scale of a specific component of a constant-velocity joint, for which the embodiment of the invention that is illustrated, purely by way of non-limiting example, in the drawings, has been developed;
- Figure 2 is a perspective view at an enlarged scale that shows a first induction-heating station provided on the platform of Figure 1;
- Figure 3 is a perspective view at an enlarged scale that shows both part of the aforesaid first station and a second induction-heating station provided on the platform of Figure 1, these stations being moreover equipped with means for cooling the components by spraying them with a cooling fluid;
- Figure 4 is a perspective view at an enlarged scale that shows a supplementary cooling station provided on the platform of Figure 1 downstream of the second induction-heating station, in which emission of a cooling fluid (liquid or gas, for example air) is envisaged;
- Figure 5 is a perspective view at an enlarged scale that shows a third induction-heating station and a second supplementary cooling station, which also delivers a cooling fluid (liquid or gas);
- Figure 6 is a further perspective view of the various operating stations arranged on the platform of Figure 1;
- Figure 7 is a perspective view that shows a plurality of gripping heads that are rotatable about respective vertical axes arranged around a central tower which is rotatable about the central vertical axis of the platform of Figure 1, these heads being each adapted to accompany the respective component permanently along the circumferential path through the various operating stations of the platform and if necessary to rotate the component about its axis;
- Figure 8 is a further perspective view, at a further enlarged scale, which shows the spindle supporting units arranged on the rotatable tower, which carry the motorized spindles that are associated with the heads for gripping the components;
- Figure 9 is an overall diagrammatic view of the apparatus according to the invention, with the platform carrying the various operating stations and the rotatable central tower on the platform, on which the spindle supporting units are vertically movable;
- Figure 10 is a further perspective view of the apparatus according to the invention, which shows the conveyors for conveying components to the apparatus inlet and for taking them away from the apparatus outlet;
- Figure 11 is a view at a further enlarged scale of a part of Figure 10;
- Figure 12 is a perspective view of the entire apparatus, according to a preferred embodiment of the invention; and
- Figures 13-15 illustrate further optional characteristics of the apparatus according to the invention.

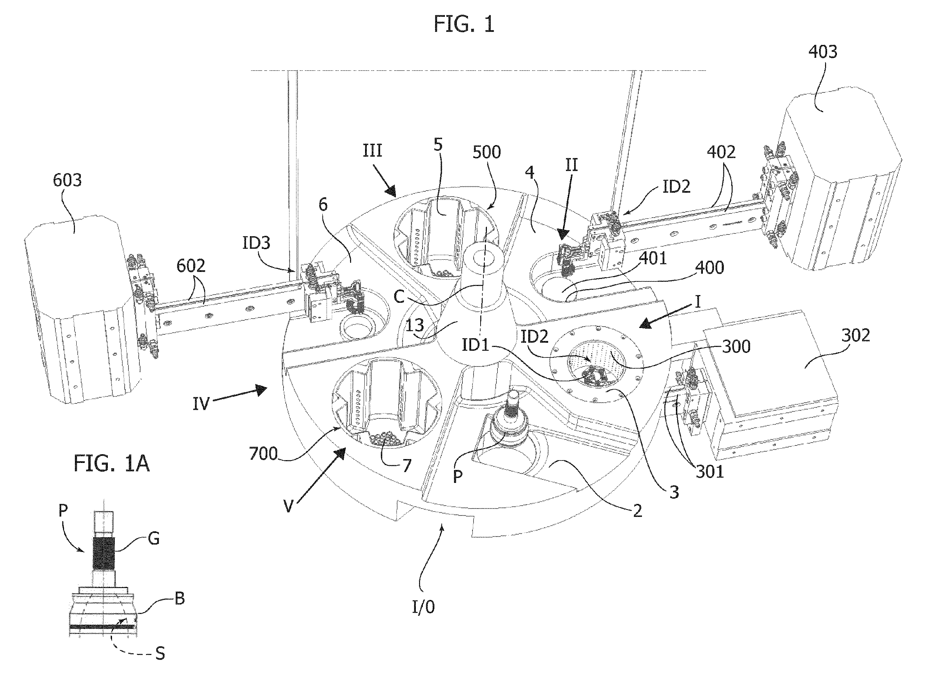

The annexed drawings refer to one embodiment of the invention designed for operating on components P of costant-velocity joints (see Figure 1A) having a metal body including a stem G terminating in a bell-shaped portion B having an inner surface S. The apparatus according to the invention is designed to carry out induction heating both of the inner surface S of the bell-shaped portion B and of a portion of the surface of the stem G.

In Figure 1, reference number 1 generally designates a platform constituting the heart of the apparatus in the embodiment illustrated herein. In principle, platform 1 is fixed, even though the possibility is not excluded that it can be arranged in various rotated positions. The platform 1 has a series of sectors 2, 3, 4, 5, 6, 7 defined on which are subsequent operating stations I/O, I, II, III, IV, V arranged along a circumferential path, through which the components to be treated are displaced in sequence.

In the illustrated example, sector 2 defines a station I/O used both for inlet of the components to be subjected to treatment and for outlet of the components that have been treated, as will be illustrated in greater detail in what follows. It is, however, evident that the inlet and outlet stations could also be defined on two different sectors of the platform 1.

Illustrated in Figure 1 is a component P set in position in the inlet/outlet station I/O. Figure 1 does not show the components P that are located in the various operating stations nor the means provided in the apparatus according to the invention for carrying the components through the various operating stations along the circumferential path defined by platform 1.

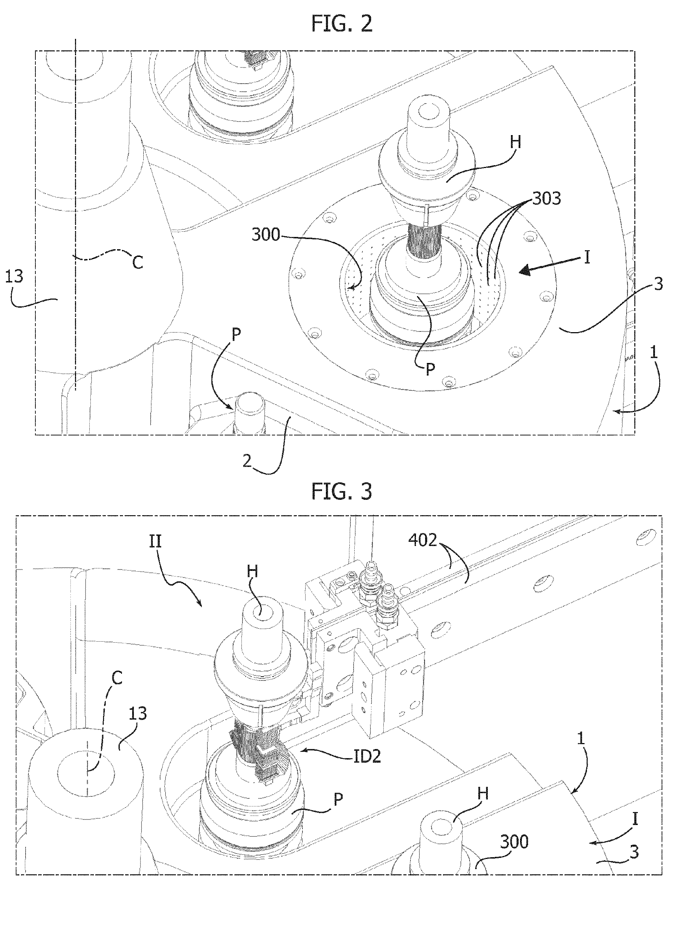

Once again with reference to Figures 1 and 2, provided on sector 3 of the platform 1 there is a first induction-heating station I, designed to carry out induction hardening of the inner surface S of the bell-shaped portion B of component P. In the example illustrated, station I is defined within a cylindrical cavity 300 that traverses the platform 1 vertically from its bottom surface to its top surface. Within said cavity 300 an inductor device ID1 projects from below.

The inductor device ID1 is made in any way known to the persons skilled in the art. Typically, the inductor device ID1 comprises a member made of copper having the function of a coil, which is traversed by an alternating current. As may be seen in Figure 1, the inductor device ID1 is carried in a cantilever fashion by two BUS bars 301 projecting horizontally from a heating head 302 mounted on a pair of slides (not illustrated) that enable both vertical and horizontal movement thereof. The inductor device is configured for being immediately adjacent to the inner surface S of the component P positioned in the station.

Following upon induction heating of the inner surface S of the bell-shaped portion B of the component that is in the station I, the bell-shaped portion B is cooled in the very same station by a shower constituted by a plurality of jets of cooling fluid (for example, liquid or air) coming out of holes or nozzles prearranged on the circumferential wall of cavity 300. These jets carry out cooling of the outer surface of the bell-shaped portion B, whilst the inner surface is also subjected to a shower of cooling fluid constituted by jets from nozzles associated to the structure of the inductor ID1, according to a technique known per se.

The component P that is located in the induction-heating station I is rotated about its axis during the heating step so as to bring the entire inner surface S of the bell-shaped portion B to cooperate with the inductor device ID1. This is obtained due to that the component P is gripped at the top end of the stem G by a gripping head H, constituted by a self-centering chuck of any known type (for example, of the type used in machine tools) carried at the bottom end of a motorized spindle, according to what will be described in greater detail in the following. The component is set in rotation about its axis also during the cooling step.

With reference once again to Figure 1 and now also to Figure 3, provided on the next sector 4 of platform 1 is a second induction-heating station II, designed to execute hardening of a portion of the stem G of the component P. Also here the station is defined by a cylindrical cavity 400 that extends from the top surface of the platform 4, but in this case the cavity 400 terminates in a bottom wall 401. Associated to the second heating station II is an inductor device ID2 carried in a cantilever fashion by two BUS bars 402 and shaped and prearranged so as to surround partially the stem G of the component P that is located in the station II, in strict proximity thereto. The bus bars 402 project horizontally from a heating head 403 mounted on a pair of slides (not illustrated) that enable both vertical and horizontal movement thereof. Also in the case of the second induction-heating station II, during the heating step, the component P is set in rotation about its axis by means of the gripping head H associated thereto (see also Figure 3) so as to expose the entire surface of the stem G to the inductor device ID2. Furthermore, also in the case of the second induction-heating station II, the circumferential wall of the cavity 400 has an array of holes or nozzles for directing jets of cooling fluid against the surface of the stem G following upon the heating step. Also the bottom wall of the cavity 400 is provided with nozzles for delivery of jets of cooling fluid so that the component P is subjected to spraying of cooling fluid both on its outer surface and on its inner surface S.

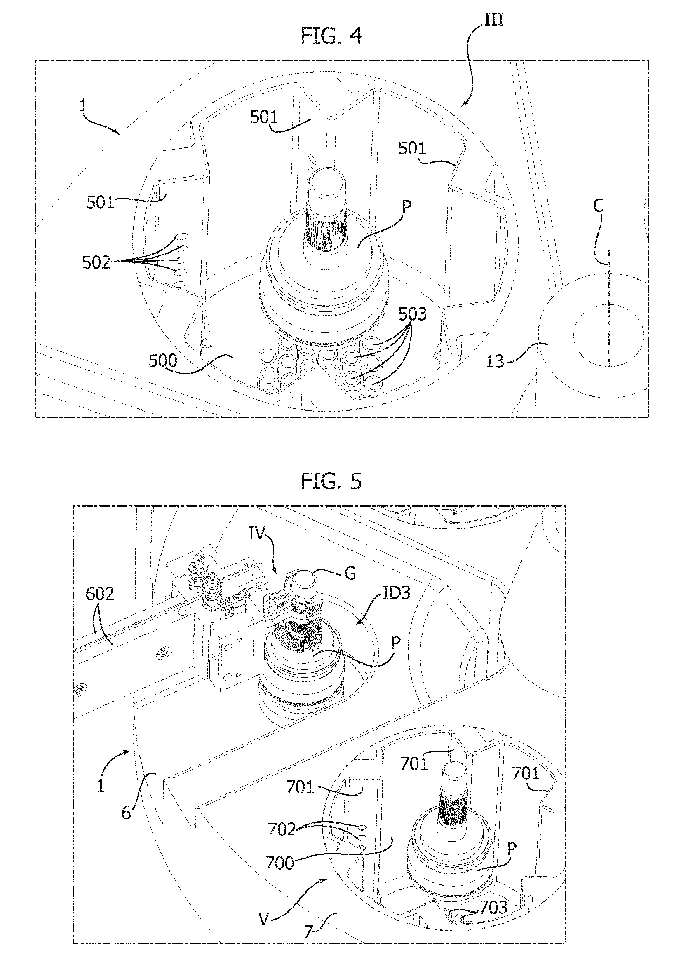

With reference to Figures 1 and 4, following upon induction heating in the second station II, each component P is brought into a station III, defined on the sector 5 of the fixed platform 1, in which a supplementary cooling operation is carried out on the component P. The supplementary cooling station III comprises a bowl 500 housed in a cavity of the platform 1, the circumferential wall of which is shaped so as to have planar portions 501 (see Figure 4) orthogonal to a tangential direction of the bowl 500. The wall portions 501 are provided with holes or nozzles 502 designed to direct cooling fluid jets in tangential directions. As may be seen in Figure 4, these tangential jets are distributed for a fair part of the height of the bowl 500. In addition, the latter is provided on its bottom with holes or nozzles 503 designed to direct cooling fluid jets upwards. In this way, within the bowl 500 there is created a turbulent circulation that improves the cooling efficiency.

In a variant, it is envisaged that the body of the bowl 500 will be movable between a lowered, resting, position and a raised, operative, position, where it projects above the platform 1.

With reference to Figures 1 and 5, on the sector 6 of the platform 1, defined immediately downstream of the supplementary cooling station III, is a further induction-heating station IV, where a further heating is carried out, with subsequent cooling of the surface of the stem G of the component P in order to obtain a tempering or a stress-relieving of the material of the stem G. The station IV is altogether similar to the station II described above. The station is defined within a cavity 600 provided with an array of holes 601 for delivery of jets of cooling fluid. Associated to the station IV is an inductor device ID3, altogether similar to the inductor device ID2, carried in acantilever fashion by two BUS bars 602 projecting horizontally from a heating head 603 mounted on a pair of slides (not illustrated) that enable both vertical and horizontal sliding thereof.

Also in this case (see Figure 5), the component P is set in rotation about its axis during the heating step so as to offer the entire surface of the stem G to the inductor device ID3.

On the next sector 7 of the platform 1 (see Figure 1 and Figure 5), a supplementary cooling station V is provided, altogether similar to the station III already described above. Also in this case, the station comprises a bowl 700 with a circumferential wall having portions 701 arranged orthogonal to a tangential direction in such a way that the holes 702 provided on the portions 701 issue jets of cooling liquid in a tangential direction, whilst vertical jets from beneath upwards come out of the nozzles 703 provided on the bottom wall of the bowl 700.

The component P that has been cooled in the station V is then sent on, in the way that will be illustrated in what follows, to the outlet station, which in the example of embodiment illustrated coincides with the inlet station of the circumferential path defined on the platform 1, this inlet and outlet station being provided on the sector 2 of the platform 1 and being designated by the reference I/O.

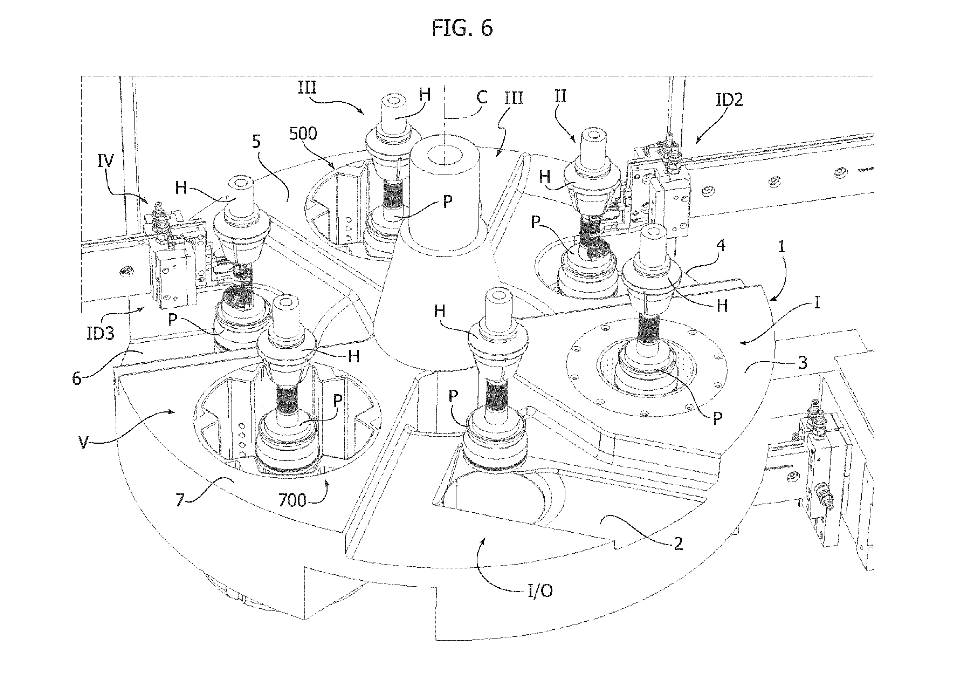

Figure 6 is a perspective overall view of the platform 1 with the operating stations I/O, I, II, III, IV and V. In Figure 6, a plurality of components P are illustrated, which are positioned, respectively, in the aforesaid operating stations and each of which is carried by a gripping head H. Each head H is, for example, made according to the configuration normally adopted for self-centring chucks of machine tools and can consequently be controlled between an opened configuration and a closed, gripping, configuration. As may be seen in Figure 6, the apparatus according to the invention is provided, in the case of the illustrated example, with six gripping heads H designed to grip and convey six components P simultaneously, each head always accompanying the respective component along the circumferential path through the various operating stations.

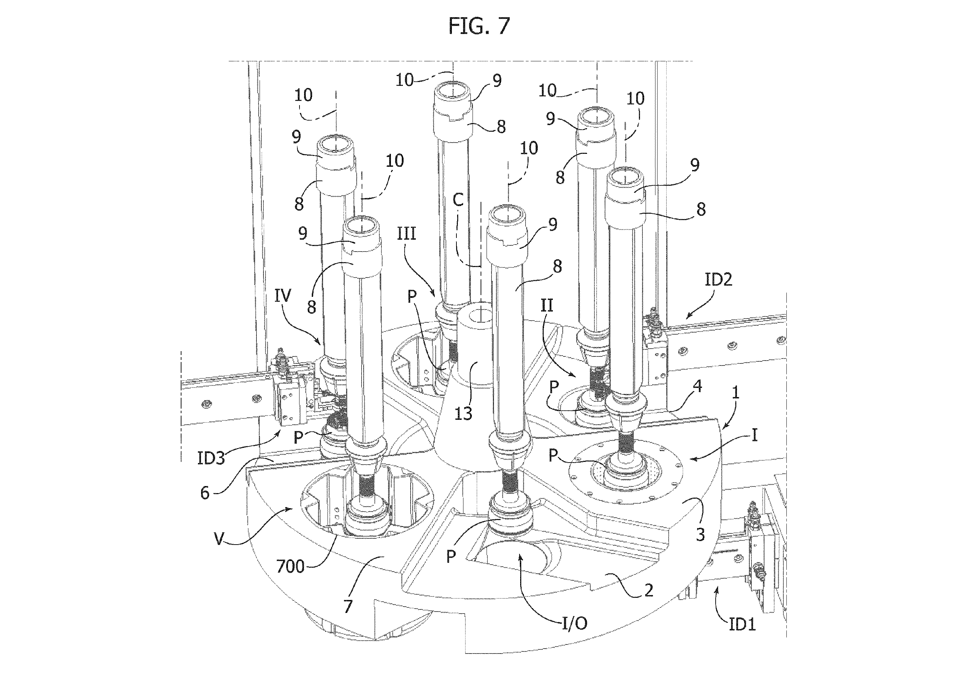

With reference to Figure 7, the six gripping heads H are carried by as many motor-driven spindles, with vertical axis, which are rotatably mounted within respective spindle supporting units 8. Supported at the top of each spindle supporting unit 8 is an electric motor 9 for driving rotation of the respective spindle about the respective vertical axis 10. Instead of the electric motor 9, motor means of any other type may be used.

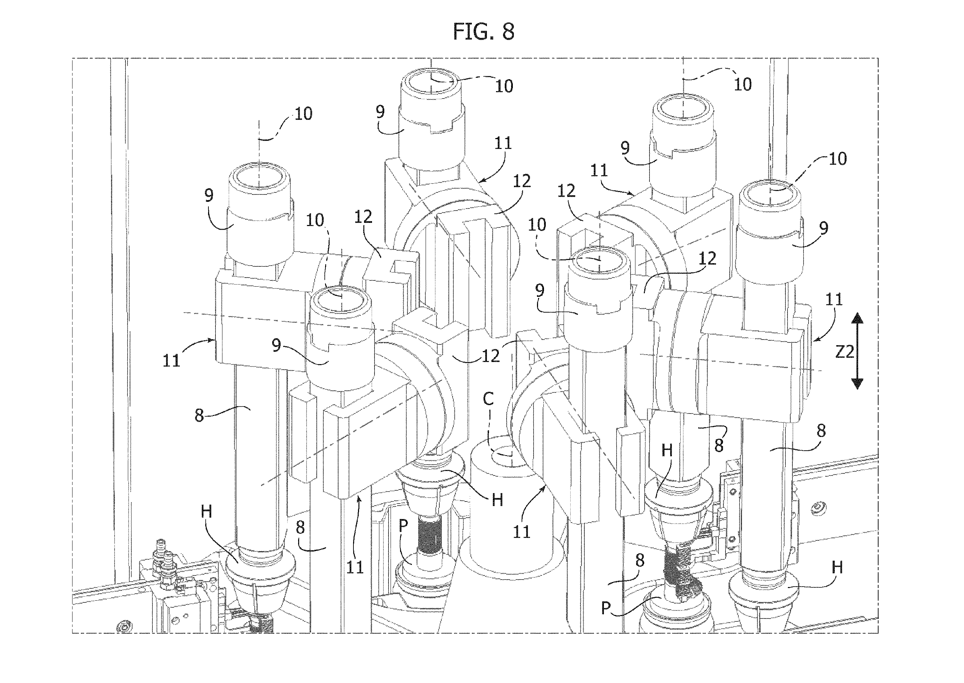

As may be seen in Figure 8, each spindle supporting unit 8 is mounted in an adjustable position along a vertical axis Z2 within a clamp 11. The drawings show clamp 11 only diagrammatically and do not provide the constructional details thereof both because they can be made in any known way and because their elimination renders the drawings simpler and easier to understand. Adjustment of the vertical position along the vertical axis Z2 of each spindle supporting unit is made just once, during the step of calibration of the apparatus. In the case of a simpler embodiment, this adjustment is carried out manually by temporarily opening the clamp 11 that supports the spindle supporting unit. In a more advanced embodiment, the position of each spindle supporting unit along the axis Z2 is controlled by an electric motor.

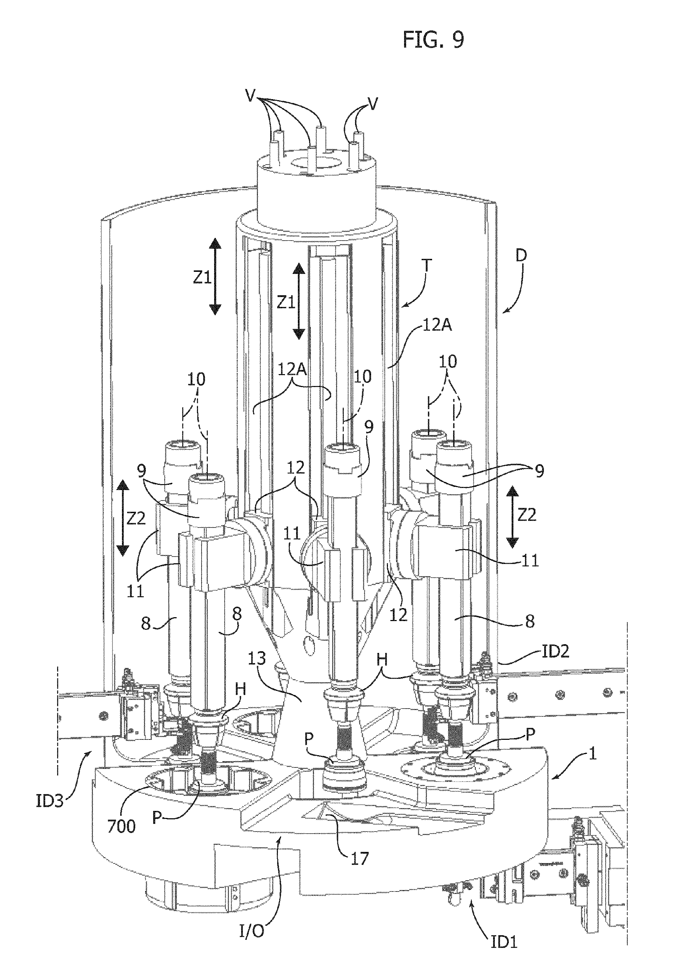

Each support 11 is in turn carried by a slide 12 that is slidably mounted along a respective vertical axis Z1 on a corresponding guide 12A provided on the periphery of a central tower T. Tower T is rotatably supported on the platform 1, about the central vertical axis C of the platform 1, as may be seen more clearly in Figure 9.

In the specific example illustrated, the vertical tower T is supported in rotation on a central hub 13 projecting vertically from the centre of the fixed platform 1. Rotation of the tower T about the central axis C is driven by an electric motor (not visible in the drawings) connected by means of a transmission of any type to a transmission wheel (not visible in the drawings either) provided at the top end of the tower T. The vertical movements of the slides 12 provided on the periphery of the tower T are driven by driving means of any type. In the case of the illustrated example, associated to the slides 12 there are respective nut-screws engaged by vertical screws V (see Figure 9) that project from the top end of the central tower T and that are driven in rotation by respective electric motors (not visible in the drawings) positioned at the top of the tower T.

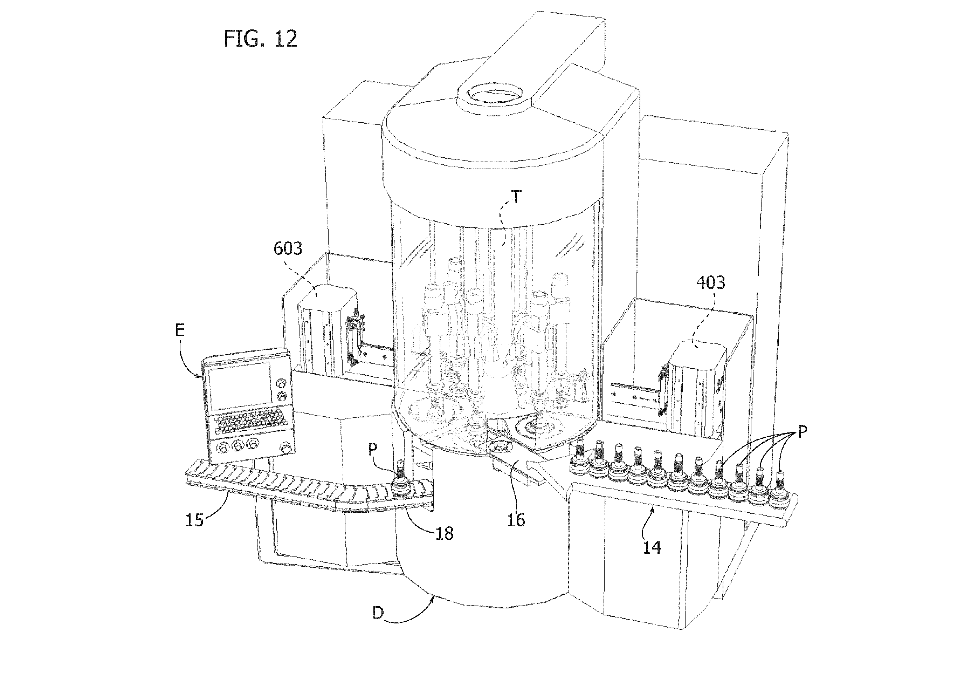

Associated to the apparatus according to the invention is an electronic control unit E (Figure 12) provided with a human-machine interface, which controls the motor for driving the tower T in rotation about the central axis C, the motors for driving the vertical displacement of the slides 12, and the motors 9 that drive the gripping heads H in rotation about their respective axes. The unit E is programmed to provide the cycle of operations described above on each component that is fed to the machine.

Whenever a new component arrives at the inlet station I/O, a respective head H drops down thereon, due to the movement of the respective slide 12 along axis Z1. The head H grips the component, comes up again, and then takes the component to the first station I, where the head drops down to position the component within the cavity 300, with the inner surface S of the bell-shaped portion set adjacent to the inductor device ID1. The head H is then set in rotation via the respective motor 9 so as to cause the component to turn both during the step of induction heating and during the cooling step. Once these steps are through, the head goes up again, and then the tower T is made to turn to take the component to the next station. The aforesaid cycle of operations is repeated at each station.

Of course, the six heads H provided on the tower T operate simultaneously so that the tower is set in rotation whenever all the heads H are ready to pass to the next station, once the cycle of operations in the station in which each head is located are through. Obviously, according to the type of component to which the apparatus according to the invention is to be applied, the number of the operating stations, the configuration of each station (as likewise the configuration and positioning of the inductor devices) may vary in order to enable on the one hand a high quality of the heating operation and on the other hand a short cycle time and a short retooling time.

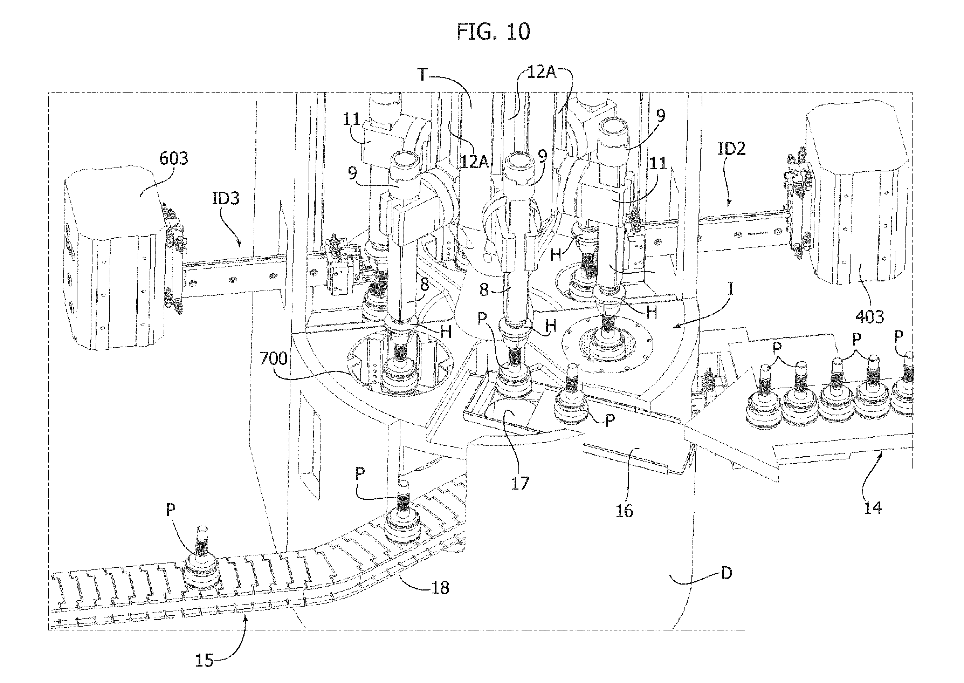

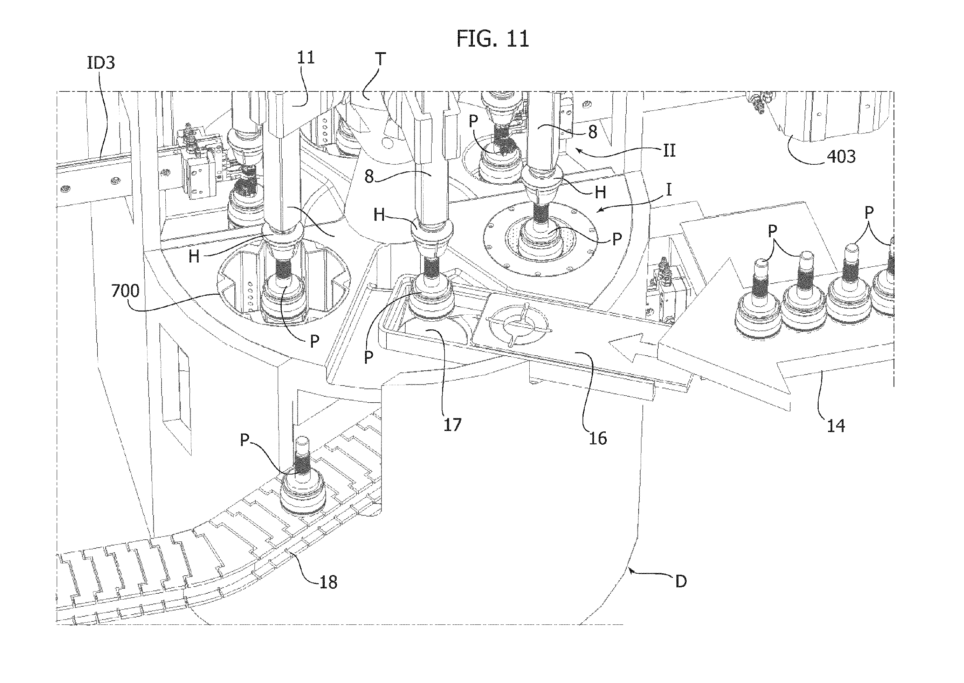

Figures 10-12 are overall views of the apparatus according to the invention, which show the housing for containing the main components of the machine, which is designated as a whole by the reference D, as well as the conveyor devices 14, 15 for feeding the components P to the inlet and taking them away from the outlet. The conveyor devices 14, 15 are illustrated schematically in the drawings. Each of these devices may be constituted, for example, by a motor-driven conveyor belt of any known type. As may be seen in Figures 10-12, the conveyor belt 14 feeds a plurality of components P arranged in a line and adjacent to one another as far as an intermediate conveyor device 16, the speed of which is controlled in such a way as to bring about a spacing between the components P so as to feed just one component P in synchronism with the gripping head H that is in the inlet/outlet station I/O, immediately after it has released a component that has already been treated. The treated components are deposited at the inlet/outlet station I/O by issuing a command for opening of the gripping head H that is in that station at the end of the circumferential path defined by the platform 1. The treated component is thus released through a trap-door mechanism 17 onto an inclined plane 18 of a conveyor device 15 (Figures 10, 12) for discharge of the components.

As emerges clearly from the foregoing description, the apparatus according to the invention has an extremely simple, rational, and compact structure, with minimal overall dimensions in plan view. Notwithstanding the compact configuration, the apparatus is designed to get all the components that are to undergo heating to describe one and the same circumferential path through the same operating stations, to the advantage of uniformity of production quality. Provision of a rotatable tower T with peripheral spindles carrying the gripping heads H enables rationalization and acceleration of the entire operating cycle. Each gripping head always accompanies a respective component along the circumferential path through the various operating stations, unlike known devices, which envisage deposit and pick-up of the components in each station.

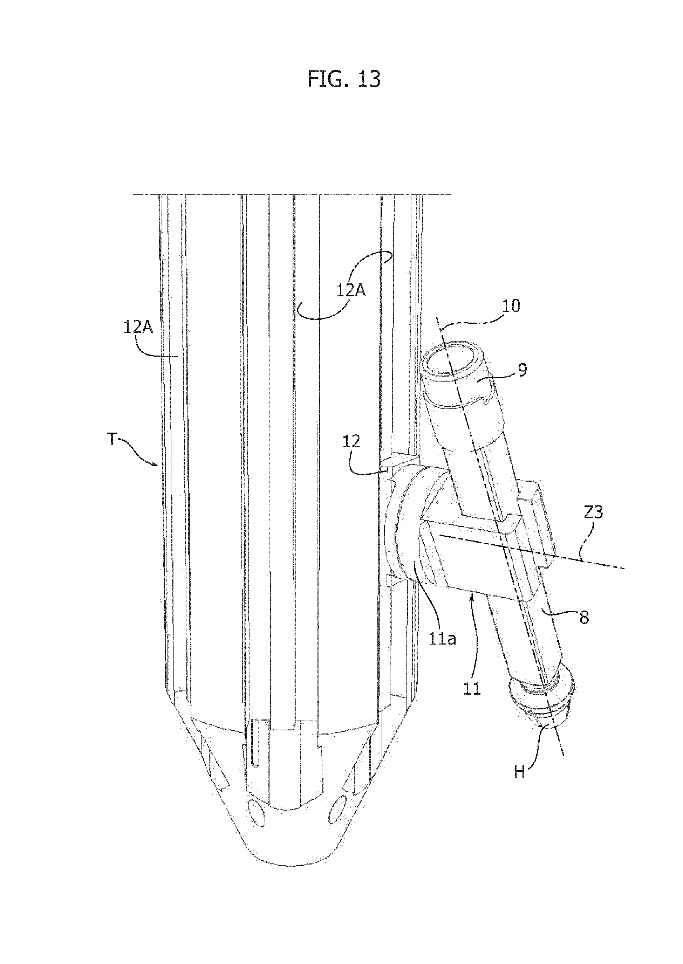

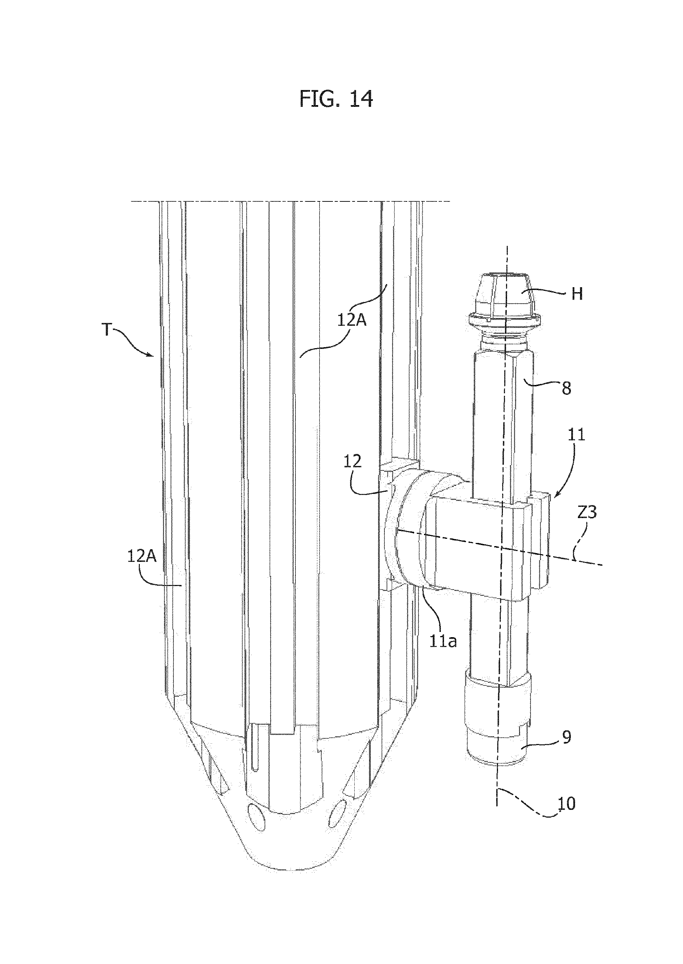

Figures 13 and 14 illustrate the detail of a spindle supporting unit 8 of the apparatus according to the invention in a variant in which the clamp 11 is equipped with a flange 11 a rotatably mounted about a radial and horizontal axis Z3 on the respective slide 12. In this way, the spindle supporting unit 8 can be turned about the axis Z3 until it moves into the position where it is turned upside down, with the gripping head H facing upwards. Figure 14 shows this position, whilst Figure 13 shows an intermediate position during rotation through 180° of the spindle supporting unit 8. This optional additional feature may prove useful in applications in which the piece picked up from the line is to be brought into a position where it is turned upside down and faces upwards. Rotation of the vice 11 is preferably controlled by motor means of any type (not illustrated).

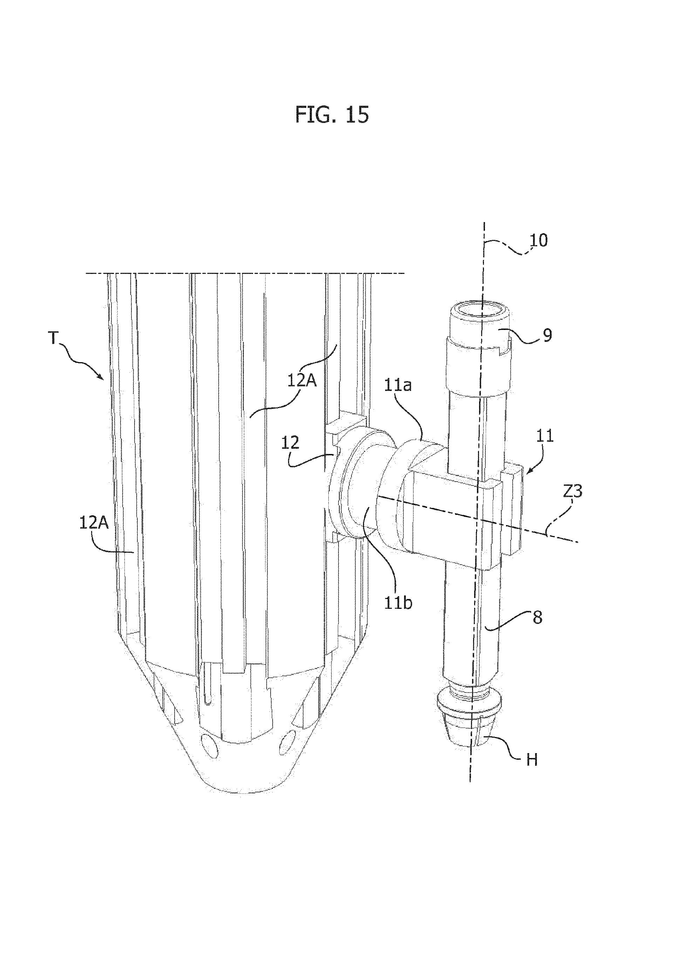

Figure 15 shows a further optional feature, whereby the clamp 11 is also mounted movable along the axis Z3 with respect to the slide 12. In the example illustrated, the flange 11 a is equipped with a stem 11 b slidably mounted within the slide 12. Also this sliding movement of the vice 11 is preferably controlled by motor means of any type (not illustrated). This additional characteristic is useful in applications where there is required the possibility of varying the radial position of each gripping head H. This option may also be useful for preventing any interference between adjacent assemblies 8 when one of them is turned about the respective axis Z3.

The characteristics of Figures 13-15 could be adopted also in an apparatus that does not envisage the vertically movable slides 12, i.e., in which the position of the axis Z3 is vertically fixed.

Of course, without prejudice to the principle of the invention, the details of construction and the embodiments may vary widely with respect to what has been described and illustrated herein purely by way of example, without thereby departing from the scope of the present invention.

It is in particular evident that the invention may be applied to components of any nature and configuration and not only to components of the type to which the example described herein refers. The configuration and number of the stations are chosen on the basis of the specific characteristics of the components and of the desired cycle time. Likewise, the configuration of the inductor devices is chosen according to the conformation of the components to be treated. Even though in the example illustrated all the operating stations are defined on a common platform, it is possible to envisage that the stations have specific and independent supporting structures, the essential element being constituted by the fact that they are arranged along a circumferential path. In the majority of applications, the gripping heads are designed to set in continuous rotation the respective component during execution of an operation in a station of the apparatus. However, it is also possible that each head will be turned only through a limited angle in order to impart on the component a desired angular position, where the shape of the component requires the component to be positioned, for example with respect to an inductor device, in a predetermined angular position. In theory, it is also possible that no rotation of the gripping heads about their axes is required so that it is sufficient for the heads to be made to circulate by the rotatable tower in order to accompany the components along the circumferential path, without envisaging a rotation of the heads about their axes. In this case, the structure of the apparatus is consequently simplified, it not being necessary to envisage motor-driven spindles for carrying the heads, albeit maintaining the possibility of displacing each head vertically.

## Claims

1. An apparatus for induction heating of a mechanical component (P), comprising a plurality of operating stations (I, II, III, IV, V) through which the component (P) is carried in sequence,
said apparatus being **characterized in that**:
- said operating stations (I, II, III, IV, V) are arranged along a circumferential path about a central vertical axis (C);
- said operating stations (I, II, III, IV, V) comprise at least one induction-heating station (I, II, IV) associated to which is a respective inductor device (ID1, ID2, ID3), for induction heating of the components;
- rotatably mounted about said central vertical axis (C) is a tower (T) carrying on its periphery a plurality of gripping heads (H) having respective peripheral vertical axes (10); and
- said gripping heads (H) are each adapted to grip a respective component (P) and to carry it in sequence through said stations (I, II, III, IV, V) as a result of a rotation of said rotatable tower (T) about said central vertical axis (C), each head being permanently accompanying the respective component along said circumferential path.

2. The apparatus according to Claim 1, **characterized in that** said operating stations (I, II, III, IV, V) are defined by sectors (2, 3, 4, 5, 6, 7) of a platform (1), on which said tower (T) carrying the gripping heads (H) is rotatably mounted.

3. The apparatus according to Claim 1, **characterized in that** the gripping heads (H) are rotatable about their respective peripheral vertical axes (10), whereby the component (P) carried by each gripping head (H) can be rotated about the respective peripheral vertical axis (10) when it is at one of said stations.

4. The apparatus according to Claim 3, **characterized in that** each gripping head (H) is carried by a vertical spindle which is rotatably mounted about its respective vertical axis (10) within a spindle supporting unit (8), **in that** each spindle supporting unit (8) is in turn carried by a respective slide (12) that is slidably mounted along a respective vertical axis (Z1) on a respective guide (12A) of said rotatable central tower (T).

5. The apparatus according to Claim 4, **characterized in that** each spindle supporting unit (8) supports first motor means (9) for driving the spindle in rotation.

6. The apparatus according to Claim 4 or Claim 5, **characterized in that** each slide (12) carrying a respective spindle supporting unit (8) is driven by motor means (V) associated with said tower (T).

7. The apparatus according to Claim 4 or Claim 5 or Claim 6, **characterized in that** each spindle supporting unit (8) is mounted in a position adjustable along a vertical axis (Z2) on a support (11) associated to the respective slide (12).

8. The apparatus according to Claim 4 or Claim 5 or Claim 6 or Claim 7, **characterized in that** said support (11) is rotatably mounted on the respective slide (12) about a radial axis (Z3).

9. The apparatus according to Claim 8, **characterized in that** said support (11) is also slidably mounted on the respective slide (12) along said radial axis (Z3).

10. The apparatus according to Claim 2, **characterized in that** at least one of said stations (I-V) is provided within a cavity (300, 400, 500, 600, 700) formed in said platform (1), **in that** the wall of said cavity (300, 400, 500, 600, 700) is provided with an array of holes or nozzles for emission of cooling fluid jets for cooling the component (P), and **in that** preferably the wall of said cavity (500, 700) has wall portions (501, 701) arranged in planes perpendicular to a tangential direction with respect to the centre of said cavity, said wall portions being provided with holes or nozzles (502, 702) for delivery of tangential cooling jets.

11. The apparatus according to Claim 1, **characterized in that** it is provided for operating on components having a body including a stem (G) terminating with a bell-shaped portion (B), and **in that** an induction-heating station (I) is provided for carrying out induction hardening of the inner surface (S) of the aforesaid bell-shaped portion (B) of the component (P) and a further induction-heating station (II) for carrying out induction hardening of the outer surface of the stem (G) of said component.

12. The apparatus according to Claim 11, **characterized in that** it comprises a third induction-heating station (IV) configured for carrying out a tempering or a stress-relieving of the component (P).

13. The apparatus according to any one of the preceding claims, **characterized in that** at the beginning and at the end of the aforesaid circumferential path there are defined a station for inlet of the components (P) to be subjected to induction heating and a station for outlet of the thermally treated components (P).

14. The apparatus according to Claim 13, **characterized in that** said inlet and outlet stations are constituted by a single common station (I/O).

15. A method for induction heating of mechanical components (P), wherein the components are carried in sequence through a plurality of operating stations II, III, IV, V) in order to carry out a series of operations for induction heating of each component (P),
said method being **characterized in that**:
said operating stations are arranged along a circumferential path about a central vertical axis (C);
said operating stations comprise at least one induction-heating station II, IV), associated to which is a respective inductor device (ID1, ID2, ID3), for induction heating of the components; and
a plurality of components (P) are carried simultaneously along said circumferential path, in such a way that the various operating stations II, III, IV, V) operate simultaneously on different components (P), and each component (P) passes in sequence through all the aforesaid operating stations,
said components (P) being conveyed by respective gripping heads (H) that have respective peripheral vertical axes (10) and that are provided on the periphery of a central tower (T) rotatably mounted about said central axis (C),
each gripping head (H) being permanently accompanying the respective component (P) along said circumferential path.
